(19) Europäisches Patentamt / European Patent Office / Office européen des brevets

(11) **EP 1 803 782 B1**

(12) **EUROPEAN PATENT SPECIFICATION**

(45) Date of publication and mention
of the grant of the patent:
**13.06.2012 Bulletin 2012/24**

(51) Int Cl.:
*C09D 11/00* (2006.01)    *C09B 67/00* (2006.01)

(21) Application number: **06026842.2**

(22) Date of filing: **22.12.2006**

(54) **Water-based inks for ink-jet printing**

Wässrige Tinten für den Tintenstrahldruck

Encre à base aqueuse pour l'impression par jet d'encre

(84) Designated Contracting States:
**DE GB**

(30) Priority: **27.12.2005 JP 2005376590**
           **10.07.2006 JP 2006188981**

(43) Date of publication of application:
**04.07.2007 Bulletin 2007/27**

(73) Proprietor: **Kao Corporation**
**Chuo-ku**
**Tokyo (JP)**

(72) Inventors:
- **Nagashima, Shigeki**
 **c/o Kao Corporation, Research Laboratories**
 **1334, Minato**
 **Wakayama-shi,Wakayama (JP)**
- **Sakakibara, Makoto**
 **1334, Minato**
 **Wakayama-shi**
 **Wakayama (JP)**
- **Iwasaki, Toshiya**
 **c/o Kao Corporation, Research Laboratories**
 **1334, Minato**
 **Wakayama-shi, Wakayama (JP)**

(74) Representative: **HOFFMANN EITLE**
**Patent- und Rechtsanwälte**
**Arabellastraße 4**
**81925 München (DE)**

(56) References cited:
EP-A- 0 822 238      US-A1- 2002 044 186
US-A1- 2004 244 622    US-A1- 2005 009 951

**Description**

FIELD OF THE INVENTION

The present invention relates to water-based inks containing water dispersions, and a process for producing same.

BACKGROUND OF THE INVENTION

In ink-jet printing methods, droplets of ink are directly projected onto a recording medium from very fine nozzles and allowed to adhere to the recording medium, to form characters and images. The use of ink-jet printing methods have been rapidly spread because of their various advantages such as easiness of full coloration, low cost, capability of using plain paper as the recording medium, non-contact with printed images and characters, etc.
Among such printing methods, in view of enhancing the weather resistance and water resistance of printed images and characters, an ink-jet printing method utilizing an ink containing a pigment as the colorant has now come to be the dominate method (for example, refer to WO 00/39226, JP 2004-217905A and JP 11-12513A).
WO 00/39226 discloses a water-based ink containing a pigment-containing vinyl polymer which is in the form of a graft polymer obtained from a macromer to achieve a high optical density. JP 2004-217905A discloses a water-based ink containing a water dispersion of a water-insoluble vinyl polymer obtained by copolymerizing a monomer mixture containing a salt-forming group-containing monomer (a), a long-chain alkyl group-containing monomer (b), a macromer (c), a polyoxyalkylene group-containing monomer, etc.
JP 11-12513A discloses an ink prepared by dispersing carbon black having a bulk density of 120 g/L or less, a water-soluble resin having a weight-average molecular weight of 3000 to 20000 which is composed of a styrene-(meth)acrylic acid-(meth)acrylate copolymer, a polyhydric alcohol and an aliphatic monohydric alcohol, in water.
EP 0 822 238 A describes a process for preparing an aqueous dispersion comprising wet milling an aqueous carrier medium, a particulate solid, and a polymeric dispersant. The dispersion is described as being particularly adapted for use for ink jet printers.
US 2004/0244622 describes an aqueous ink for ink jet recording comprising a dispersible colorant. The dispersible colorant comprises a colorant and resin fine particles in which the resin fine particles have a smaller size than the colorant. Both colorant and resin fine particles are fixed to each other. The particle diameter of the colorant is preferably 10 to 500 nanometers and the cumulative average diameter of the resin fine particles is between 10 and 200 nanometers.
US 2005/0009951 describes a process for preparing an aqueous dispersion of a pigment, comprising the steps of kneading a mixture containing a pigment, adding water or an organic solvent, and dispersing the solid matter in the resulting diluted mixture. The kneaded mixture contains a pigment, a polymer having a salt-forming group, a neutralizing agent for neutralizing the polymer and an organic solvent and water. The concentration of solid matter is 50 to 80% by weight of the mixture.
US 2002/0044186 describes an ink-jet recording system wherein the ink-receiving layer of the recording medium is a porous layer comprising alumina hydrate and a resin binder and has a pore volume ranging from 0.1 to 1.0 ml/g. The pigment ink comprises an aqueous medium, a resin and a pigment, the particle diameter of the pigment substantially falls within a range of from 10 to 500 nm, and the proportion of the pigment particles having a particle diameter of 300 to 500 nm is at most 30% based on the total number of particles of the pigment.
These conventional water-based inks are improved in image density, etc., to some extent, but are still unsatisfactory, and it is therefore desired to further improve these properties.

SUMMARY OF THE INVENTION

The present invention relates to aspects [1] to [9] as outlined in the claims.

DETAILED DESCRIPTION OF THE INVENTION

The present invention relates to a water-based ink for ink-jet printing which is excellent in ejection reliability, image density, image uniformity and rubbing resistance, and a process for producing same.
The inventors have found that when using a pigment having a specific bulk or a pigment having a specific particle size which is obtained by a pulverization/classification treatment, the resultant water-based ink is excellent in ejection reliability, image density, image uniformity and rubbing resistance.

(Pigment)

The pigment used in the present invention preferably has a bulk of 3.5 to 20 mL/g, more preferably 3.7 to 18 mL/g and even more preferably 3.8 to 16 mL/g in view of attaining excellent ejection reliability, image density, image uniformity and rubbing resistance when blended in inks. The pigment usable in the present invention is not particularly limited as long as the bulk thereof lies within the above-specified range, and the pigment is organic. The pigment may also be a self-dispersible type pigment. Further, the pigment may be used in combination with an extender pigment, if required. The bulk of the pigment may be measured at 25°C according to JIS K5101-18(1978). In order to reduce error upon the measurement, the bulk of the pigment is measured by adjusting the water content thereof to 0.1% by weight or less.

Examples of the organic pigments include azo pigments, disazo pigments, phthalocyanine pigments, quinacridone pigments, isoindolinone pigments, dioxazine pigments, perylene pigments, perinone pigments, thioindigo pigments, anthraquinone pigments and quinophthalone pigments.

Examples of the preferred organic pigments include those pigments having respective product numbers of C.I. Pigment Yellow, C.I. Pigment Red, C.I. Pigment Violet, C.I. Pigment Blue, C.I. Pigment Green, etc. Specific examples of the suitable organic pigments include C.I. Pigment Yellow 13, 17, 74, 83, 97, 109, 110, 120, 128, 139, 151, 154, 155, 174, 180; C.I. Pigment Red 48, 57:1, 122, 146, 176, 184, 185, 188, 202; C.I. Pigment Violet 19, 23; C.I. Pigment Blue 15, 15:1, 15:2, 15:3, 15:4, 16, 60; and C.I. Pigment Green 7, 36.

Examples of the extender pigment include silica, calcium carbonate and talc.

In order to render the pigment self dispersible, a necessary amount of an anionic hydrophilic group such as a carboxyl group, a sulfonic group and a phosphoric group or a cationic hydrophilic group such as an ammonium group and an amino group may be chemically bonded to a surface of the pigment directly or through the other atomic group by a known method.

In view of ejection reliability, image uniformity, etc., upon chromatic color high-speed printing, the pigment is an organic pigment.

(Production of Pigment)

The method for producing the pigment used in the present invention is not particularly limited. The pigment is preferably produced by pulverization/classification treatment in which the pigment is pulverized and then classified. For example, after pulverizing the pigment by a jet mill, a turbo mill, etc., the pulverized pigment may be classified in an air classifier such as a micro-plex and a turbo classifier, thereby obtaining the aimed pigment. In view of a high efficiency, the pigment is preferably produced by using a pulverization-classifier capable of performing pulverization and classification of the pigment at the same time. More preferably, the pigment is produced by using a pulverization-classifier with a drying function which is capable of performing drying, pulverization and classification of the pigment at the same time, since such an apparatus allows even a wet pigment (wet cake) obtained by a wet method to be finely divided. The pulverization/classification treatment enables the pigment having a bulk of 3.5 to 20 mL/g to be produced with a high efficiency.

Examples of the pulverization-classifier include a fluidized bed-type jet mill.

The fluidized bed-type jet mill includes, for example, those mills that have the following structure or is operated based on the following principle. That is, in the fluidized bed-type jet mill, a pulverization chamber in which a plurality of jet nozzles are disposed in an opposed relation to each other is provided in a lower portion thereof, a high-speed gas jet injected from the jet nozzles forms a fluidized bed of pigment particles supplied into the pulverization chamber, and acceleration and mutual impingement of the particles are repeated to finely divide the pigment particles.

The number of jet nozzles disposed in the jet mill is not particularly limited, and a plurality of jet nozzles, preferably 3 to 4 jet nozzles, are disposed in an opposed relation to each other in view of a good balance between the air amount, the flow amount and the flow rate, impingement efficiency of the particles, etc.

The pulverization-classifier is preferably further provided, above the pulverization chamber, with a classifying rotor for collecting the pulverized small-size pigment particles which were moved upwardly.

The thus pulverized particles obtained in the above pulverization step which are classified with an upper limit of the particle size (upper-limit classification) are directly subjected to the next classification step, in particular, preferably subjected to a lower-limit classification for removing too fine particles therefrom. The upper-limit classified particles obtained in the pulverization step are inhibited from suffering from agglomeration of fine particles contained therein, so that the lower-limit classification can be performed with a high accuracy.

The frequency of the classification step to be conducted is not limited to one time, and the classification step may be repeated a plurality of times using different kinds of classifiers. The classifiers are preferably provided with a classification rotor which may be disposed in the direction either parallel with or perpendicular to the vertical direction of the classifier. In order to obtain the small-size pigment having a sharp particle size distribution with a high efficiency, the classification

**EP 1 803 782 B1**

rotor is preferably disposed in the direction parallel with the vertical direction of the classifier. In particular, the classifier used in the present invention is preferably equipped with a classification rotor rotatably supported on a driving shaft as a central axis which is disposed in the vertical direction in a casing thereof, and stationary helical guide vanes fixedly supported concentrically to the driving shaft as the central axis which are disposed in a classification zone around an outer periphery of the classification rotor so as to be spaced apart from the outer periphery of the classification rotor. With the classifier of this type, the pulverized upper-limit classified particles fed into the casing are moved downwardly along the classification zone around the outer periphery of the classification rotor while being guided by the helical guide vanes. An interior of the classification rotor is communicated with the classification zone through classification vanes provided on an outer peripheral surface of the classification rotor. When the pulverized particles are moved downwardly, the finer pigment particles having a predetermined bulk which are entrained on a classifying air are sucked and introduced into the inside of the classification rotor. On the other hand, coarse particles which are not entrained on the classifying air are continuously moved downwardly by gravity along the classification zone without being collected by the classification rotor, and then discharged from an outlet port for coarse particles, and further pulverized again, if required.

The particle size distribution and bulk of the pigment may be readily controlled by the revolution number of such a classification rotor. The classifier is preferably provided with two classification rotors which rotatably disposed in one casing on a common driving shaft as a central axis. The two classification rotors are preferably individually rotated in the same direction.

When two classification rotors are respectively disposed as upper and lower stage rotors, it is possible to classify the pigment with a higher accuracy by controlling the suction speed of the classifying air and the rotating speed of the respective classification rotors. For example, the ratio of the rotating speed of the upper stage classification rotor to the rotating speed of the lower stage classification rotor, i.e., the ratio of a flow rate of the upper stage classifying air to a flow rate of the lower stage classification air, is preferably substantially identical to each other in view of attaining a high classification accuracy and a good yield of the pigment.

Specific examples of the fluidized bed-type jet mill equipped with a plurality of jet nozzles and classification rotors, include the pulverizer described in JP 2002-35631A, and "TFG" series and "AFG" series commercially available from Hosokawa Micron Co., Ltd. Specific examples of the classifier include those classifiers described in Figs. 1 and 2 of JP 11-216425, Fig. 6 of JP 2004-78063A and Fig. 1 of JP 2001-293438A, and "TSP" series, "TTSP" series and "Counter Jet Mill" all commercially available from Hosokawa Micron Co., Ltd.

Specific examples of the pulverization-classifier with a drying function include the "Dry Meister" series commercially available from Hosokawa Micron Co., Ltd. Among them, "Dry Meister DMR" is preferred. In the "Dry Meister" classifier, the pigment fed thereto is pulverized (dispersed) and simultaneously dried in the pulverizing portion thereof , and then the dried pigment fine particles which are controlled to a predetermined bulk in the classification portion thereof are continuously discharged therefrom. In this case, the particle size distribution of the pigment may be controlled by suitably adjusting the rotating speed of the classification rotor. The rotating speed of the pulverization rotor is preferably from 3000 to 8000 rpm and more preferably from 4000 to 7000 rpm, whereas the rotating speed of the classification rotor is preferably from 1000 to 5000 rpm. Also, a feed rate (wet cake feed rate) of the wet pigment (wet cake) produced by a wet method is preferably from 1 to 50 kg/h.

The bulk of the thus obtained pigment is preferably from 3.5 to 20 mL/g, more preferably from 3.7 to 18 mL/g and even more preferably from 3.8 to 16 mL/g. The pigment preferably has such a configuration having a less anisotropy (less the difference between the major axis diameter and minor axis diameter). In view of ejection reliability, image density, image uniformity and rubbing resistance when blended in inks, the pigment has D50 (cumulative 50% value in frequency distribution of scattering intensity when the cumulative percentage is calculated sequentially from smaller particles) of preferably 2 to 15 $\mu$m, more preferably 3 to 12 $\mu$m and even more preferably 5 to 10 $\mu$m, and D90 (cumulative 90% value in frequency distribution of scattering intensity when the cumulative percentage is calculated sequentially from smaller particles) of preferably 60 $\mu$m or less, more preferably 50 $\mu$m or less, even more preferably 30 $\mu$m or less and even more preferably 20 $\mu$m or less, but preferably not less than 10 $\mu$m. Also, from the same viewpoints, the content of coarse particles having a particle size of 20 $\mu$m or more in the pigment (ratio of number of coarse particles having a particle size of 20 $\mu$m or more in frequency distribution) is preferably 8% or less, more preferably 6% or less, even more preferably 5% or less and even more preferably 0%. The D50, D90 and content of coarse particles having a particle size of 20 $\mu$m or more may be measured by the methods described in the below-mentioned Examples. The above pulverization/classification treatment is advantageous in that the resultant particles have the above suitable particle size distribution unlike a filtration method in which particles having a predetermined particle size or more are simply removed by a filter without well-controlling a particle size distribution of the resultant particles.

(Water-Insoluble Polymer)

Examples of water-insoluble polymer forming the water-insoluble polymer particles include water-insoluble vinyl polymers, water-insoluble ester-based polymers and water-insoluble urethane-based polymers. Among these water-insoluble polymers, preferred are water-insoluble vinyl polymers in view of good stability of the resultant water dispersion.

The term "water-insoluble polymer" used herein means such a polymer which is dissolved at 25°C in 100 g of water in an amount of 10 g or less, preferably 5 g or less and more preferably 1 g or less after being dried at 105°C for 2 h. When the water-insoluble polymer contains a salt-forming group, the above amount of the water-insoluble polymer dissolved in water is measured after the salt-forming group is neutralized 100% with acetic acid or sodium hydroxide according to the kind of salt-forming group.

The water-insoluble polymer is preferably a water-insoluble graft polymer containing a constitutional unit derived from a macromer (b) in view of allowing the resultant water dispersion and water-based ink to exhibit a sufficient image density. In particular, the water-insoluble polymer is more preferably a water-insoluble graft polymer which includes a polymer unit containing a constitutional unit derived from a salt-forming group-containing monomer (a) and a constitutional unit derived from a hydrophobic monomer (c) in a main chain thereof, and a polymer unit containing a constitutional unit derived from the macromer (b) in a side chain thereof.

The water-insoluble graft polymer is preferably a water-insoluble vinyl polymer which may be produced by copolymerizing a monomer mixture containing the salt-forming group-containing monomer (a) (hereinafter occasionally referred to merely as the "component (a)"), the macromer (b) (hereinafter occasionally referred to merely as the "component (b)") and the hydrophobic monomer (c) (hereinafter occasionally referred to merely as the "component (c)") (hereinafter, the mixture is occasionally referred to as merely a "monomer mixture").

Salt-forming group-containing monomer (a):

The salt-forming group-containing monomer (a) is used for enhancing a dispersion stability of the resultant dispersion, etc. The component (a) includes cationic monomers and anionic monomers. Specific examples of the component (a) include those monomers described on page 5, from column 7, line 24 to column 8, line 29 of JP 9-286939A. Examples of the salt-forming group include a carboxyl group, a sulfonic group, a phosphoric group, an amino group and an ammonium group.

Typical examples of the cationic monomers include unsaturated amine-containing monomers and unsaturated ammonium salt-containing monomers. Among these cationic monomers, preferred are N,N-dimethylaminoethyl (meth)acrylate and N-(N',N'-dimethylaminopropyl) (meth)acrylate.

Typical examples of the anionic monomers include unsaturated carboxylic acid monomers, unsaturated sulfonic acid monomers and unsaturated phosphoric acid monomers.

Examples of the unsaturated carboxylic acid monomers include acrylic acid, methacrylic acid, crotonic acid, itaconic acid, maleic acid, fumaric acid, citraconic acid and 2-methacryloyloxymethylsuccinic acid.

Examples of the unsaturated sulfonic acid monomers include styrenesulfonic acid, 2-acrylamido-2-methylpropanesulfonic acid, 3-sulfopropyl (meth)acrylate and bis(3-sulfopropyl)itaconate.

Examples of the unsaturated phosphoric acid monomers include vinylphosphonic acid, vinyl phosphate, bis(methacryloxyethyl)phosphate, diphenyl-2-acryloyloxyethyl phosphate, diphenyl-2-methacryloyloxyethyl phosphate and dibutyl-2-acryloyloxyethyl phosphate.

Among the above anionic monomers, in view of good dispersion stability and good ejecting reliability of the resultant dispersions and inks, preferred are the unsaturated carboxylic acid monomers, and more preferred are acrylic acid and methacrylic acid.

The above compounds as the component (a) may be used alone or in combination of any two or more thereof.

Macromer (b):

The macromer (b) is used in view of enhancing a dispersion stability of the water-insoluble polymer fine particles containing the carbon black, etc., and may be such a macromer which is a monomer containing a polymerizable unsaturated functional group at one terminal end thereof and having a number-average molecular weight of 500 to 100,000 and preferably 1,000 to 10,000.

Meanwhile, the number-average molecular weight of the component (b) may be measured by gel permeation chromatography using polystyrene as a standard substance and using tetrahydrofuran containing 50 mmol/L of acetic acid as a solvent.

Specific examples of the macromer as the component (b) include the below-mentioned styrene-based macromers (b-1), alkyl (meth)acrylate-based macromers (b-2), aromatic ring-containing (meth)acrylate-based macromers (b-3) and silicone-based macromers (b-4).

Styrene-based macromer (b-1):

The styrene-based macromer means a macromer containing a constitutional unit derived from the styrene-based monomer (hereinafter occasionally referred to merely as a "monomer (b-1)") such as styrene, α-methyl styrene and vinyl toluene. Among these styrene-based monomers, preferred is styrene.

Examples of the styrene-based macromer include styrene homopolymers having a polymerizable functional group at one terminal end thereof, and copolymers of styrene with the other monomer which have a polymerizable functional group at one terminal end thereof. The polymerizable functional group bonded to the one terminal end is preferably an acryloyloxy group or a methacryloyloxy group. When these functional groups are copolymerized with the other components, it is possible to produce the water-insoluble graft polymer containing a constitutional unit derived from the styrene-based macromer.

Examples of the other monomer copolymerizable with styrene include acrylonitrile, the below-mentioned (meth)acrylates (hereinafter occasionally referred to merely as the "monomer (b-2)"), and aromatic ring-containing (meth)acrylate-based monomers other than styrene (hereinafter occasionally referred to merely as the "monomer (b-3)").

The content of the constitutional unit derived from the styrene-based monomer in the side chain or the styrene-based macromer is preferably 60% by weight or more, more preferably 70% by weight or more and even more preferably 90% by weight or more in view of good rubbing resistance.

The styrene-based macromer is commercially available, for example, from Toagosei Co., Ltd., as product names of AS-6(S), AN-6(S), HS-6(S), etc.

Alkyl(meth)acrylate-based macromer (b-2)

The alkyl(meth)acrylate-based macromer means such a macromer containing a constitutional unit derived from the (meth)acrylate (hereinafter referred to merely as the "monomer (b-2)") containing an alkyl group having 1 to 22 carbon atoms and preferably 1 to 18 carbon atoms which may also contain a hydroxyl group.

Specific examples of the (meth)acrylate include methyl (meth)acrylate, ethyl (meth)acrylate, (iso)propyl (meth)acrylate, 2-hydroxyethyl (meth)acrylate, (iso- or tertiary-)butyl (meth)acrylate, 2-ethylhexyl (meth)acrylate, (iso)octyl (meth)acrylate, (iso)decyl (meth)acrylate and (iso)stearyl (meth)acrylate.

The side chain containing the constitutional unit derived from the monomer (b-2) may be produced by copolymerizing the alkyl(meth)acrylate-based macromer having a polymerizable functional group at one terminal end thereof. Examples of the alkyl(meth)acrylate-based macromer include a methyl methacrylate-based macromer, a butyl acrylate-based macromer, an isobutyl methacrylate-based macromer and a lauryl methacrylate-based macromer.

These alkyl(meth)acrylate-based macromers may be homopolymers of the alkyl(meth)acrylate having a polymerizable functional group at one terminal end thereof, or copolymers of the alkyl(meth)acrylate with other monomer which have a polymerizable functional group at one terminal end thereof. The polymerizable functional group bonded to one terminal end is preferably an acryloyloxy group or a methacryloyloxy group. Examples of the other monomer copolymerizable with the alkyl(meth)acrylate include the above-mentioned styrene-based monomers (monomers (b-1)) and the below-mentioned aromatic ring-containing (meth)acrylate-based monomers other than styrene (monomer (b-3)).

In the side chain or the alkyl(meth)acrylate macromer, the content of the constitutional unit derived from the (meth) acrylate is largest, and preferably 60% by weight or more, more preferably 70% by weight or more and even more preferably 90% by weight or more in view of good rubbing resistance.

Aromatic ring-containing (meth)acrylate-based macromer (b-3)

The aromatic ring-containing (meth)acrylate-based macromer means such a macromer containing a constitutional unit derived from the aromatic ring-containing (meth)acrylate as the monomer (b-3). The aromatic ring-containing (meth)acrylate is preferably a monomer represented by the following formula (2):

$$CH_2=CR^1COOR^2 \qquad (2)$$

wherein $R^1$ is a hydrogen atom or a methyl group; and $R^2$ is a substituted or unsubstituted arylalkyl group having 7 to 22 carbon atoms or a substituted or unsubstituted aryl group having 6 to 22 carbon atoms.

Specific examples of the aromatic ring-containing (meth)acrylate include benzyl (meth)acrylate, phenyl (meth)acrylate, 2-phenylethyl (meth)acrylate, phenoxyethyl (meth)acrylate, 1-naphthyl acrylate, 2-naphthyl (meth)acrylate, phthalimidomethyl (meth)acrylate, p-nitrophenyl (meth)acrylate, 2-hydroxy-3-phenoxypropyl (meth)acrylate, 2-methacryloyloxyethyl-2-hydroxypropyl phthalate and 2-acryloyloxyethyl phthalate. Among these the aromatic ring-containing (meth)acrylates, preferred is benzyl (meth)acrylate. These aromatic ring-containing (meth)acrylates may be used alone or in combination of any two or more thereof.

The side chain containing the constitutional unit derived from the aromatic ring-containing (meth)acrylate may be produced by copolymerizing the aromatic ring-containing (meth)acrylate-based macromer having a polymerizable functional group at one terminal end thereof.

Examples of the aromatic ring-containing (meth)acrylate-based macromer include homopolymers of the aromatic ring-containing (meth)acrylate having a polymerizable functional group at one terminal end thereof, and copolymers of the aromatic ring-containing (meth)acrylate with other monomer which have a polymerizable functional group at one terminal end thereof. The polymerizable functional group bonded to one terminal end of the macromer is preferably an acryloyloxy group or a methacryloyloxy group. Examples of the other monomers copolymerizable with the aromatic ring-containing (meth)acrylate include the above-mentioned styrene-based monomers as the monomer (b-1) and the (meth)acrylates as the monomer (b-2).

In the side chain or the aromatic ring-containing (meth)acrylate-based macromer, the constitutional unit derived from the aromatic ring-containing (meth)acrylate has the largest content.

Silicone-based macromer (b-4)

The water-insoluble graft polymer used in the present invention may further contain an organopolysiloxane chain as the side chain thereof. Such a side chain is preferably produced, for example, by copolymerizing a silicone-based macromer having a polymerizable functional group at one terminal end thereof which is represented by the following formula (3):

$$CH_2=C(CH_3)-COOC_3H_6-[Si(CH_3)_2-O]_t-Si(CH_3)_3 \qquad (3)$$

wherein t is a number of 8 to 40.

When the polymer used in the present invention is the water-insoluble graft polymer, the weight ratio of a main chain of the polymer to a side chain thereof [main chain/side chain] is preferably from 1/1 to 20/1, more preferably from 3/2 to 15/1 and even more preferably from 2/1 to 10/1 in view of enhancing a rubbing resistance and a storage stability. Meanwhile, the weight ratio is calculated assuming that the polymerizable functional group is contained in the side chain. Among the above macromers, the styrene-based macromers having a polymerizable functional group at one terminal end thereof are preferred in view of a high affinity to the carbon black and an enhanced storage stability.

Hydrophobic Monomer (c):

The hydrophobic monomer (c) is used for enhancing water resistance, a high lighter-fastness, etc. Examples of the hydrophobic monomer include alkyl (meth)acrylates, alkyl (meth)acrylamides and aromatic ring-containing monomers.

The alkyl (meth)acrylates are preferably (meth)acrylates containing an alkyl group having 1 to 30 carbon atoms. Examples of the alkyl (meth)acrylates include methyl (meth)acrylate, ethyl (meth)acrylate, (iso)propyl (meth)acrylate, (iso- or tertiary-)butyl (meth)acrylate, (iso)amyl (meth)acrylate, cyclohexyl (meth)acrylate, 2-ethylhexyl (meth)acrylate, (iso)octyl (meth)acrylate, (iso)decyl (meth)acrylate, (iso)dodecyl (meth)acrylate, (iso)cetyl (meth)acrylate, (iso)stearyl (meth)acrylate and (iso)behenyl (meth)acrylate. Among these alkyl (meth)acrylates, in view of good dispersion stability, preferred are (meth)acrylates containing a long-chain alkyl group having preferably 8 to 30 carbon atoms and more preferably 12 to 22 carbon atoms, and more preferred are (iso)lauryl (meth)acrylate, (iso)stearyl (meth)acrylate and (iso)behenyl (meth)acrylate.

Examples of the alkyl (meth)acrylamides include (meth)acrylamides containing an alkyl group having 1 to 22 carbon atoms such as dimethyl (meth)acrylamide, diethyl (meth)acrylamide, dibutyl (meth)acrylamide, t-butyl (meth) acrylamide, octyl (meth)acrylamide and dodecyl (meth)acrylamide.

Examples of the aromatic ring-containing monomers include styrene-based monomers (c-1) such as styrene, 2-methyl styrene and vinyl toluene; aryl esters of (meth)acrylic acid such as benzyl (meth)acrylate and phenoxyethyl (meth) acrylate; and aromatic group-containing vinyl monomers having 6 to 22 carbon atoms (c-2) such as ethyl vinyl benzene, 4-vinyl biphenyl, 1,1-diphenyl ethylene, vinyl naphthalene and chlorostyrene.

Meanwhile, the terms "(iso- or tertiary-) " and "(iso)" used herein mean both the structure in which the groups expressed by "iso" and "tertiary" are present, and the structure in which these groups are not present (namely, "normal"), and the term "(meth)acrylate" means acrylate, methacrylate or both thereof.

As the component (c), in view of enhancing an image density and a high lighter-fastness, there are preferably used the (meth)acrylate containing a long-chain alkyl group having 8 to 30 carbon atoms and/or the aromatic ring-containing monomer.

The above respective components (c) may be used alone or in combination of any two or more thereof.

(Other Monomers)

In the present invention, the monomer mixture containing the respective components (a), (b) and (c) preferably further contains (d) a hydroxyl-containing monomer (hereinafter occasionally referred to merely as a "component (d)"). The component (d) exhibits an excellent effect of enhancing the dispersion stability of the resultant dispersion. Examples of the component (d) include 2-hydroxyethyl (meth)acrylate, 3-hydroxypropyl (meth)acrylate, polyethylene glycol (n = 2 to 30 wherein n represents an average molar number of addition of oxyalkylene groups: this definition is similarly applied to the subsequent descriptions) (meth) acrylate, polypropylene glycol (n = 2 to 30) (meth)acrylate and poly(ethylene glycol (n = 1 to 15)/propylene glycol (n = 1 to 15) (meth)acrylate. Among these components (d), preferred are 2-hydroxyethyl (meth)acrylate, polyethylene glycol monomethacrylate and polypropylene glycol methacrylate.

The monomer mixture may further contain (e) a monomer (hereinafter occasionally referred to merely as a "component (e)") represented by the following general formula (4):

$$CH_2=C(R^3)COO(R^4O)_pR^5 \qquad (4)$$

wherein $R^3$ is a hydrogen atom or an alkyl group having 1 to 5 carbon atoms; $R^4$ is a divalent hydrocarbon group having 1 to 30 carbon atoms which may contain a hetero atom; $R^5$ is a monovalent hydrocarbon group having 1 to 30 carbon atoms which may contain a hetero atom; and p represents an average molar number of addition, and is a number from 1 to 60 and preferably a number from 1 to 30.

The component (e) exhibits an excellent effect of enhancing an ejecting reliability of the resultant water-based ink and preventing occurrence of slippage even upon continuous printing.

In the general formula (4), examples of the hetero atom which may be contained in $R^4$ and $R^5$ groups include a nitrogen atom, an oxygen atom, a halogen atom and a sulfur atom.

Typical examples of the groups represented by $R^4$ and $R^5$ include an aromatic group having 6 to 30 carbon atoms, a heterocyclic group having 3 to 30 carbon atoms, and an alkylene group having 1 to 30 carbon atoms. These groups may have a substituent group, and may be used in combination of any two or more thereof. Examples of the substituent group include an aromatic group, a heterocyclic group, an alkyl group, a halogen atom and an amino group.

Examples of the groups represented by $R^4$ include a substituted or unsubstituted phenylene group having 1 to 24 carbon atoms, an aliphatic alkylene group having 1 to 30 carbon atoms and preferably 1 to 20 carbon atoms, an aromatic ring-containing alkylene group having 7 to 30 carbon atoms, and a hetero ring-containing alkylene group having 4 to 30 carbon atoms. Specific examples of the preferred $R^4O$ group include an oxymethylene group, an oxy(iso)propylene group, an oxytetramethylene group, an oxyheptamethylene group, an oxyhexamethylene group, oxyalkylene groups having 2 to 7 carbon atoms which are each constituted from at least one of these oxyalkylene groups, and an oxyphenylene group.

Examples of the groups represented by $R^5$ include a phenyl group, a branched or unbranched aliphatic alkyl group having 1 to 30 carbon atoms and preferably 1 to 20 carbon atoms, an aromatic ring-containing alkyl group having 7 to 30 carbon atoms, and a hetero ring-containing alkyl group having 4 to 30 carbon atoms. Examples of the preferred $R^5$ group include an alkyl group having 1 to 12 carbon atoms such as methyl, ethyl, (iso)propyl, (iso)butyl, (iso)pentyl and (iso)hexyl, and a phenyl group.

Specific examples of the component (e) include methoxy polyethylene glycol (p in the general formula (4): 1 to 30; this definition is similarly applied to the subsequent descriptions) (meth)acrylate, methoxy polytetramethylene glycol (p = 1 to 30) (meth)acrylate, ethoxy polyethylene glycol (p = 1 to 30) (meth)acrylate, (iso)propoxy polyethylene glycol (p = 1 to 30) (meth)acrylate, butoxy polyethylene glycol (p = 1 to 30) (meth)acrylate, octoxy polyethylene glycol (p = 1 to 30) (meth)acrylate, methoxy polypropylene glycol (p = 1 to 30) (meth)acrylate, and methoxy (ethylene glycol/ propylene glycol copolymer) (p = 1 to 30: among which the number of ethylene glycol constitutional units is 1 to 29) (meth)acrylate. Among these compounds, preferred is methoxy polyethylene glycol (p = 2 to 20) (meth)acrylate and octoxy polyethylene glycol (p = 2 to 20) (meth)acrylate.

Specific examples of the commercially available components (d) and (e) include polyfunctional acrylate monomers (NK Esters) available from Shin-Nakamura Kagaku Kogyo Co., Ltd., such as "M-40G", "M-90G" and "M-230G"; and BLEMMER Series available from NOF Corporation, such as "PE-90", "PE-200", "PE-350", "PME-100", "PME-200", "PME-400", "PME-1000", "PP-500", "PP-800", "PP-1000", "AP-150", "AP-400", "AP-550", "AP-800", "50PEP-300" and "50POEP-800B".

These components (d) and (e) are respectively used alone or in the form of a mixture of any two or more thereof.

Upon production of the water-insoluble polymer, the respective contents of the above components (a) to (e) in the monomer mixture (contents of unneutralized components; this definition is similarly applied to the subsequent descriptions) or the contents of respective constitutional units derived from the components (a) to (e) are as follows.

The content of the component (a) is preferably from 1 to 50% by weight, more preferably from 2 to 40% by weight, even more preferably from 3 to 30% by weight and further even more preferably from 5 to 20% by weight in view of good dispersion stability of the resultant dispersion, etc.

The content of the component (b) is preferably from 1 to 50% by weight, more preferably from 3 to 40% by weight and even more preferably from 5 to 35% by weight in view of good dispersion stability of the resultant dispersion, etc.

The content of the component (c) is preferably from 5 to 90% by weight, more preferably from 5 to 80% by weight and even more preferably from 10 to 60% by weight in view of enhancing water resistance, a high lighter-fastness, gloss, etc. The weight ratio of the component (a) to a sum of the components (b) and (c) ((a)/[(b)+(c)]) is preferably from 0.01 to 1, more preferably from 0.02 to 0.7 and even more preferably from 0.05 to 0.5 in view of a good long-term storage stability and good ejecting reliability of the resultant water-based ink, etc.

The content of the component (d) is preferably from 1 to 40% by weight, more preferably from 2 to 30% by weight and even more preferably from 5 to 25% by weight in view of good re-dispersibility and good dispersion stability. The content of the component (e) is preferably from 1 to 50% by weight, more preferably from 2 to 30% by weight and even more preferably from 5 to 30% by weight in view of good ejecting reliability, good dispersion stability, etc.

The total content of the components (a) and (d) in the monomer mixture is preferably from 5 to 60% by weight, more preferably from 7 to 50% by weight and even more preferably from 10 to 40% by weight in view of good stability in water and good water resistance, etc.

The total content of the components (a) and (e) in the monomer mixture is preferably from 5 to 75% by weight, more preferably from 7 to 50% by weight and even more preferably from 10 to 40% by weight in view of good dispersion stability in water and good ejecting reliability, etc.

The total content of the components (a), (d) and (e) in the monomer mixture may be controlled, if required, to the range of preferably from 5 to 60% by weight, more preferably from 7 to 50% by weight and even more preferably from 10 to 40% by weight in view of good dispersion stability in water, good ejecting reliability, etc.

The water-insoluble polymer constituting the water-insoluble polymer particles used in the present invention may be produced by copolymerizing the monomer mixture by known methods such as bulk polymerization, solution polymerization, suspension polymerization and emulsion polymerization. Among these polymerization methods, the solution polymerization is preferred since the effects such as high image density and high anti-bleeding property are suitably attained by the method.

The solvent used in the solution polymerization method is preferably an organic polar solvent having a high affinity to the water-insoluble polymer. The organic polar solvent preferably has a solubility in water of not more than 50% by weight but not less than 5% by weight as measured at 20˚C. Examples of the organic polar solvents include aliphatic alcohols such as butoxyethanol; aromatic hydrocarbons such as toluene and xylene; ketones such as methyl ethyl ketone and methyl isobutyl ketone; and esters such as ethyl acetate. Among these solvents, preferred are methyl ethyl ketone, methyl isobutyl ketone, toluene, xylene, butoxyethanol, and mixed solvents of at least one thereof with water.

The polymerization may be carried out in the presence of a conventionally known polymerization initiator, e.g., azo compounds such as 2,2'-azobisisobutyronitrile and 2,2'-azobis(2,4-dimethylvaleronitrile), and organic peroxides such as t-butyl peroxyoctoate and dibenzoyl oxide. The amount of the polymerization initiator to be used is preferably from 0.001 to 5 mol and preferably from 0.01 to 2 mol per 1 mol of the monomer mixture.

The polymerization may also be carried out in the presence of a conventionally known chain transfer agent, e.g., mercaptans such as octyl mercaptan and 2-mercaptoethanol, and thiuram disulfides.

The polymerization conditions of the monomer mixture vary depending upon the kinds of polymerization initiators, monomers, solvents, etc., to be used, and the polymerization is generally conducted at a temperature of 30 to 100˚C and preferably 50 to 80˚C. The polymerization time is from 1 to 20 h. The polymerization is preferably conducted in an atmosphere of an inert gas such as nitrogen and argon.

After completion of the polymerization, the polymer thus produced may be isolated from the reaction solution by a known method such as reprecipitation and removal of solvent by distillation. The thus obtained polymer may be purified by repeated reprecipitation, membrane separation, chromatography, extraction, etc., for removing unreacted monomers, etc., therefrom.

The weight-average molecular weight of the resultant water-insoluble polymer is preferably from 1,000 to 500,000, more preferably from 5,000 to 400,000, even more preferably from 10,000 to 300,000 and further even more preferably from 14,000 to 200,000 in view of good dispersion stability of the carbon black, good water resistance and good ejecting reliability.

Meanwhile, the weight-average molecular weight of the polymer may be measured by gel permeation chromatography using polystyrene as a standard substance and using chloroform containing 1 mmol/L of dodecyldimethylamine as a solvent.

When the water-insoluble polymer used in the present invention contains a salt-forming group derived from the salt-forming group-containing monomer (a), the salt-forming group is neutralized with a neutralizing agent. As the neutralizing agent, acids or bases may be used according to the kind of the salt-forming group contained in the polymer. Examples of the neutralizing agent include acids such as hydrochloric acid, acetic acid, propionic acid, phosphoric acid, sulfuric acid, lactic acid, succinic acid, glycolic acid, gluconic acid and glyceric acid, and bases such as lithium hydroxide, sodium hydroxide, potassium hydroxide, ammonia, methylamine, dimethylamine, trimethylamine, ethylamine, diethylamine, triethylamine, triethanolamine and tributylamine.

The degree of neutralization of the salt-forming group is preferably from 10 to 200%, more preferably from 20 to 180% and even more preferably from 50 to 150%. When the salt-forming group is an anionic group, the degree of neutralization thereof is calculated according to the following formula:

$$[\text{weight (g) of neutralizing agent})/\text{equivalent of neutralizing agent}]/$$

$$[\text{acid value of polymer (KOH mg/g) x weight (g) of polymer}/(56 \times 1000)] \times 100$$

When the salt-forming group is a cationic group, the degree of neutralization thereof is calculated according to the following formula:

$$[\text{weight (g) of neutralizing agent})/\text{equivalent of neutralizing agent}]/$$

$$[\text{amine value of polymer (HCl mg/g) x weight (g) of polymer}/(36.5 \times 1000)] \times 100$$

The acid value or amine value may be calculated from the respective constitutional units of the polymer, or may also be determined by the method of subjecting a solution prepared by dissolving the polymer in an appropriate solvent such as methyl ethyl ketone to titration.

Process for production of water dispersion

The water dispersion that contains the water-insoluble polymer particles containing the pigment having a bulk of 3.5 to 20 mL/g or the water-insoluble polymer particles containing the organic pigment obtained by the pulverization/ classification treatment (both are hereinafter referred to merely as "pigment-containing particles") is obtained by dispersing the pigment in an aqueous medium in the presence of the water-insoluble polymer, and preferably produced through the following steps (1) and (2):

Step (1): Dispersing a mixture containing the water-insoluble polymer, the organic solvent, the above-prepared pigment having a bulk of 3.5 to 20 mL/g or the organic pigment obtained by the pulverization/classification treatment (both are hereinafter occasionally referred to merely as "pigment"), and water as well as neutralizing agent, if required.

Step (2): Removing the organic solvent from the resultant dispersion.

In the step (1), first, preferably, the water-insoluble polymer is dissolved in an organic solvent, and then the pigment and water together with optional components such as neutralizing agent and surfactant, if required, are added and mixed in the resultant organic solvent solution to obtain a dispersion of an oil-in-water type. The content of the pigment in the mixture is preferably from 5 to 50% by weight. The content of the organic solvent in the mixture is preferably from 10 to 70% by weight. The content of the water-insoluble polymer in the mixture is preferably from 2 to 40% by weight, and the content of water in the mixture is preferably from 10 to 70% by weight. The water-insoluble polymer containing a salt-forming group is preferably neutralized with a neutralizing agent. In this case, the water-insoluble polymer may be previously neutralized with the neutralizing agent. The degree of neutralization of the salt-forming group in the polymer is not particularly limited. In general, the degree of neutralization is preferably controlled such that the finally obtained water dispersion exhibits a neutral liquid property, for example, a pH of 4 to 10. The pH of the dispersion may also be determined from a desired degree of neutralization for the water-insoluble polymer.

Examples of the preferred organic solvents include alcohol solvents, ketone solvents and ether solvents, i.e., the organic solvents are preferably those having a solubility in water of not more than 50% by weight but not less than 10% by weight as measured at 20°C.

Examples of the alcohol solvents include ethanol, isopropanol, various butanols and diacetone alcohol. Examples of the ketone solvents include acetone, methyl ethyl ketone, diethyl ketone and methyl isobutyl ketone. Examples of the ether solvents include dibutyl ether, tetrahydrofuran and dioxane. Among these solvents, preferred are isopropanol, acetone and methyl ethyl ketone, and more preferred is methyl ethyl ketone. These solvents may be used alone or in the form of a mixture of any two or more thereof.

As the neutralizing agent, there may be used the same compounds as described above.

The method for dispersing the mixture used in the step (1) is not particularly limited. Preferably, the mixture is first subjected to preliminary dispersion procedure, and then to the substantial dispersion procedure by applying a shear stress thereto.

Upon subjecting the mixture to the preliminary dispersion procedure, there may be used ordinary mixing or stirring devices such as anchor blades. Examples of the preferred mixing or stirring devices include high-speed mixers or stirrers. To apply the shear stress to the mixture in the substantial dispersion procedure, there may be used, for example, kneading machines such as roll mills, beads mills, kneaders and extruders, and homo-valve-type or chamber-type high-pressure homogenizers.

In the step (2), the organic solvent is removed by distillation from the dispersion thus obtained in the above step (1) to render the dispersion aqueous or water-based and thereby obtain a water dispersion of the pigment-containing particles having a desired average particle size. The removal of the organic solvent from the water dispersion may be performed by an ordinary method such as distillation under reduced pressure. The organic solvent is substantially completely removed from the thus obtained water dispersion of the pigment-containing particles. The content of the residual organic solvent in the water dispersion is preferably 0.1% by weight or less and more preferably 0.01% by weight or less. Further, the thus obtained water dispersion of the pigment-containing particles may be classified by centrifugal separation in order to obtain the pigment-containing particles having a desired particle size. The water dispersion of the pigment-containing particles is preferably passed through a filter to remove coarse particles therefrom. Although such coarse particles are usually not present or present only in a small amount, in order to prevent clogging of nozzles in a printer, the mesh size of the filter is preferably from 0.45 to 10 $\mu$m and more preferably from 0.8 to 5 $\mu$m. In the above water dispersion of the pigment-containing particles, solid components made of the pigment-containing water-insoluble polymer are dispersed in water as a main medium. The configuration of the pigment-containing particles is not particularly limited as long as the particles are formed from at least the pigment and the water-insoluble polymer. Examples of the configuration of the pigment-containing particles include the particle configuration in which the pigment is enclosed in the respective water-insoluble polymer particles, the particle configuration in which the pigment is uniformly dispersed in the respective water-insoluble polymer particles, and the particle configuration in which the pigment is exposed onto a surface of the respective water-insoluble polymer particles.

The pigment-containing particles have D50 (cumulative 50% value in frequency distribution of scattering intensity when the cumulative percentage is calculated sequentially from smaller particles) of preferably 120 nm or less, more preferably 115 nm or less and even more preferably 110 nm or less, in view of prevention of clogging of the nozzles in a printer, dispersion stability, ejection reliability, image density, image uniformity and rubbing resistance. The lower limit of D50 of the pigment-containing particles is preferably 70 nm or more and more preferably 80 nm or more in view of the facilitated production of the pigment-containing particles. From the above viewpoints, the D50 of the pigment-containing particles is more preferably from 70 to 120 nm, even more preferably from 80 to 115 nm and further even more preferably from 80 to 110 nm.

The pigment-containing particles have D90 (cumulative 90% value in frequency distribution of scattering intensity when the cumulative percentage is calculated sequentially from smaller particles) of preferably 180 nm or less, more preferably 170 nm or less and even more preferably 160 nm or less, in view of less content of coarse particles, enhanced storage stability of the water dispersion, ejection reliability, image density, image uniformity and rubbing resistance. The lower limit of D90 of the pigment-containing particles is preferably 90 nm or more and more preferably 100 nm or more in view of facilitated production of the pigment-containing particles. From the above viewpoints, the D90 of the pigment-containing particles is more preferably in the range of from 90 to 180 nm, even more preferably from 100 to 170 nm and further even more preferably from 100 to 160 nm.

The D50 and D90 of the pigment-containing particles may be measured by the methods described in the Examples below.

The water dispersion of the water-insoluble polymer particles may be directly used as a water-based ink using water as a main medium, and may further contain various additives ordinarily used in water-based inks for ink-jet printing such as wetting agents, penetrants, dispersants, viscosity modifiers, defoaming agents, mildew-proof agents and anti-corrosion agents.

The content of the pigment in the water dispersion and the water-based ink of the present invention is preferably from 1 to 30% by weight, more preferably from 2 to 20% by weight, even more preferably from 2 to 10% by weight and further even more preferably from 3 to 8% by weight in view of good dispersion stability, a high image density, etc. Also, the weight ratio of the pigment to the water-insoluble polymer [pigment/water-insoluble polymer] is preferably from 50/50 to 90/10 and more preferably from 50/50 to 80/20 in view of a high image density, etc.

The content (solid content) of the pigment-containing particles in the water dispersion and the water-based ink is preferably controlled to the range of from 0.5 to 30% by weight and more preferably from 1 to 15% by weight in view of a high image density and good ejection reliability thereof.

The content of water in the water dispersion and the water-based ink of the present invention is preferably from 10 to 90% by weight and more preferably from 20 to 80% by weight.

The surface tension of the water dispersion of the present invention is preferably from 30 to 65 mN/m and more preferably from 35 to 60 mN/m as measured at 20°C, and the surface tension of the water-based ink of the present invention is preferably from 25 to 50 mN/m and more preferably from 27 to 45 mN/m as measured at 20°C.

The viscosity of the water dispersion of the present invention which has a solid content of 20 wt% is preferably from 1 to 12 mPa•s, more preferably from 1 to 9 mPa·s and even more preferably from 2 to 6 mPa·s as measured at 20°C to produce a water-based ink having a suitable viscosity. The viscosity of the water-based ink of the present invention is preferably from 2 to 20 mPa·s, more preferably from 2.2 to 15 mPa·s and even more preferably from 2.2 to 12 mPa·s in view of maintaining good ejection reliability thereof.

EXAMPLES

The following examples further describe and demonstrate embodiments of the present invention. The examples are given solely for the purpose of illustration and are not to be construed as limitations of the present invention. In the following production examples, examples and comparative examples, the "part(s)" and "%" indicate "part(s) by weight" and "% by weight", respectively, unless otherwise specified.

PRODUCTION EXAMPLES 1 AND 2 (Production of Polymer Solution)

A reaction vessel was charged with 40.1 parts (on the weight basis) of a monomer solution as an initial charge shown in Table 1, followed by mixing the solution. Then, the reaction vessel was fully purged with a nitrogen gas to thereby obtain a mixed solution.
Separately, 160.4 parts (on the weight basis) of a dropping monomer solution as shown in Table 1 was charged into a dropping funnel, and the dropping funnel was fully purged with a nitrogen gas to thereby obtain a mixed solution.
The mixed solution in the reaction vessel was heated to 75°C while stirring in a nitrogen atmosphere, and then the mixed solution in the dropping funnel was gradually dropped thereinto over 3 h. After completion of the dropping, the obtained mixed solution was held at a temperature of 75°C for 2 h, and then a solution prepared by dissolving 0.3 part of a polymerization initiator (2,2'-Azobis(2,4-dimethyl valeronitrile) in 5 parts of methyl ethyl ketone) was added to the mixed solution, and the resultant solution was aged at 75°C for 3 h and further at 85°C for 2 h to obtain a polymer solution.
A part of the resultant polymer solution was dried under reduced pressure at 105°C for 2 h to remove the solvent therefrom, thereby isolating the polymer. The weight-average molecular weight of the resultant polymer was measured by the above method.
The results are shown in Table 1. Meanwhile, the numerical values of the respective monomers as shown in Table 1 indicate weight parts of the effective ingredients therein.

TABLE 1

|  | Production Example 1 | Production Example 2 |
|---|---|---|
| Initially charged monomer solution (wt part) | | |
| (a) Methacrylic acid | 3 | 3 |
| (b) Styrene macromer [1] | 2 | 2 |
| (c) Styrene | 10 | 2 |
| (c) Stearyl methacrylate | | 10 |
| (d) Polypropylene glycol monomethacrylate [2] | | 3 |
| (e) Octoxy polyethylene glycol monomethacrylate [3] | 5 | |
| Methyl ethyl ketone | 20 | 20 |
| 2-Mercaptoethanol | 0.1 | 0.1 |
| Dropping monomer solution (wt part) | | |
| (a) Methacrylic acid | 12 | 12 |
| (b) Styrene macromer [1] | 8 | 8 |
| (c) Styrene | 40 | 8 |
| (c) Stearyl methacrylate | | 40 |
| (d) Polypropylene glycol monomethacrylate [2] | | 12 |

(continued)

| Dropping monomer solution (wt part) | | |
|---|---|---|
| (e) Octoxy polyethylene glycol monomethacrylate [*3] | 20 | |
| Methyl ethyl ketone | 80 | 80 |
| 2-Mercaptoethanol | 0.1 | 0.1 |
| 2,2'-Azobis(2,4-dimethyl valeronitrile) | 0.3 | 0.3 |
| Weight-average molecular weight of resultant polymer | 38,000 | 51,000 |
| Note: *1: "AS-6S" (tradename) having a number-average molecular weight of 6000 available from Toagosei Co., Ltd. *2: "PP-500" (tradename) available from NOF Corporation; molar number of addition of propyleneoxide: 9 mol in average; terminal group: hydrogen *3: Development product available from Shin-Nakamura Kagaku Kogyo Co., Ltd.; molar number of addition of ethyleneoxide: 4 mol in average; terminal group: 2-ethylhexyl | | |

EXAMPLES 1 TO 4 AND COMPARATIVE EXAMPLES 1 AND 2 (Water Dispersion of Pigment-Containing Particles, and Production of Water-Based Ink)

Twenty five parts of the polymer obtained by drying the polymer solution produced in Production Examples 1 and 2 under reduced pressure, was dissolved in 71 parts of methyl ethyl ketone, and a neutralizing agent (5N sodium hydroxide aqueous solution) was added to the obtained polymer solution in an amount of 65% (7 parts) on the basis of an acid value thereof, and simultaneously 211 parts by weight of ion-exchanged water was added thereto while stirring to neutralize a salt-forming group of the polymer. Further, 75 parts by weight of the below-mentioned pigment was added to the neutralized product, and the resultant mixture was fully stirred and then dispersed under a high pressure of 180 MPa by passing through a dispersing apparatus "MICRO FLUIDIZER" (tradename) available from Microfluidics Corp., 15 times, thereby obtaining water-insoluble vinyl polymer particles enclosing the colorant. The resultant paste was diluted (about 10%) with ion-exchanged water, fully stirred, and then heat-treated using an evaporator to remove methyl ethyl ketone and water therefrom, thereby obtaining a water dispersion of pigment-containing particles having a solid content of 20%. The average particle size of the thus obtained pigment-containing particles was measured by the below-mentioned method. The results are shown in Table 2.

[Pigment]

The following pigments were used in Examples 1 to 4 and Comparative Examples 1 and 2.
A dimethyl quinacridon pigment (C.I. Pigment Red 122; available from Ciba Specialty Chemicals Inc.; tradename: "IRGAPHOR MAGENTA DMQ Crude") was processed under the following conditions using "Dry Meister DNR-1" available from Hosokawa Micron Co., Ltd.
Pigment 1 used in Example 1: Pulverized and classified at an injection drying temperature of 150˚C; a wet cake feed rate of 47 kg/h; a classification rotor vent temperature of 67 to 74˚C; a pulverization rotor rotating speed of 5000 rpm; a classification rotor rotating speed of 1000 rpm; and a dust-collecting air flow rate of 25 Nm$^3$/min.
Pigment 2 used in Example 2: Pulverized and classified in the same manner as Pigment 1 except for using a wet cake feed rate of 30 kg/h; a pulverization rotor rotating speed of 5500 rpm; and a classification rotor rotating speed of 3000 rpm.
Pigment 3 used in Example 3: Pulverized and classified in the same manner as Pigment 1 except for using a wet cake feed rate of 20 kg/h; a pulverization rotor rotating speed of 5500 rpm; and a classification rotor rotating speed of 4000 rpm.
Pigment 4 used in Example 4: Pulverized and classified in the same manner as Pigment 1 except for using a wet cake feed rate of 10 kg/h; a pulverization rotor rotating speed of 6200 rpm; and a classification rotor rotating speed of 5000 rpm.
Pigment 5 used in Comparative Example 1: Untreated dimethyl quinacridon pigment (C.I. Pigment Red 122).
Pigment 6 used in Comparative Example 2: The untreated dimethyl quinacridon pigment (C.I. Pigment Red 122) was dried, and then pulverized for 1 h at a pulverization rotor rotating speed of 2200 rpm using "Pulverizer . ACM-100" available from Hosokawa Micron Co., Ltd.

[Measurement of Particle Size of Pigment]

Measured using a laser diffraction/scattering type particle size distribution measuring apparatus "" LA-950" (dry type & wet type) available from Horiba Seisakusho Co., Ltd., under the following conditions.

Temperature: 25˚C; Dispersing Medium: Ethanol; Circulation Level: 5; Stirring Level: 1
No ultrasonic dispersion was conducted, and a refractive index (1.36) of ethanol was inputted as a refractive index of the dispersing medium, and the value of 1.60 was inputted as a refractive index of the organic substance.

[Measurement of Particle Size of Pigment-Containing Particles]

Measured using a laser particle analyzing system "ELS-8000" (cumulant analysis) available from Otsuka Denshi Co., Ltd., under the following conditions.
Temperature: 25˚C;
Angle between incident light and detector: 90˚;
Cumulative frequency: 200 times
A refractive index of water (1.333) was inputted to the analyzing system as a refractive index of the dispersing medium. Upon the above measurement, a concentration of the solution to be measured was about $5 \times 10^{-3}$% by weight.
Twenty five parts of the above obtained water dispersion of the pigment-containing particles, 10 parts of glycerol, 5 parts of 2-{2-(2-butoxyethoxy)ethoxy}ethanol, 2 parts of hexanediol, 0.5 part of acetylene glycol EO adduct (n = 10) ["ACETYLENOL E100" (tradename) available from Kawaken Fine Chemical Co., Ltd.] and 57.5 parts of ion-exchanged water were mixed with each other. The resultant mixed solution was passed through a 1.2-$\mu$m membrane filter "Minisart (tradename)" available from Sartorius Inc., thereby obtaining a water-based ink.
The properties of water-based inks obtained in the respective Examples and Comparative Examples were evaluated by the following methods. The results are shown in Table 2.

(1) Ejection Reliability

Using an ink-jet printer "EM930C" (product number) of a piezoelectric type commercially available from Seiko Epson Co., Ltd., after character images were continuously printed at a rate of 2000 characters per sheet on 100 plain papers P "4024" available from Fuji Xerox Co., Ltd., a text document including characters, solid images and ruled lines was printed on the paper to evaluate the following three items:

(i) Sharp and clear characters;
(ii) Uniform solid images; and
(iii) No slippage of ruled lines.

The results were evaluated according to the following evaluation criteria.

[Evaluation Criteria]

○: All of the three items were satisfied (Acceptable level);
△: The three items were not completely but almost satisfied (Still acceptable level without practical problem); and
×: One or more items were unsatisfied (Not acceptable level).

(2) Image Density

Solid image printing was carried out on the same plain paper P "4024" as used in the above (1). After allowing the printed paper to stand for one day, the image density was measured at optional 10 positions on the paper using an optical densitometer "SpectroEye" available from Gretag-Macbeth Corp., to calculate an average of the measured values.

(3) Image Uniformity (Voids)

Solid image printing was carried out on the same plain paper P "4024" as used in the above (1) to conduct a sensory evaluation about whether or not any unevenness of color occurred. The results were evaluated according to the following evaluation criteria.

[Evaluation Criteria]

○ No unevenness of color occurred (No voids);
Δ: Some unevenness of color occurred; and
×: Significant unevenness of color occurred (Voids).

(4) Rubfastness:

Solid image printing was carried out on the same plain paper P as used in the above (1) and a chromatic color glossy paper available from Fuji Xerox Co., Ltd., and dried at 25°C for 24 h. Then, the printed surface of each paper was strongly rubbed with fingers to evaluate the degree of rubbing-off of the printed images according to the following evaluation criteria.

[Evaluation Criteria]

○: Substantially no rubbing-off of printed images, and no staining of surrounding portions.
Δ: Substantially no rubbing-off of printed images and slight staining of surrounding portions, but acceptable level without practical problem.
×: Considerable rubbing-off of printed images, and severe staining of surrounding portions and considerable staining of fingers.

TABLE 2

| | Examples | | | | Comparative Examples | |
|---|---|---|---|---|---|---|
| | 1 | 2 | 3 | 4 | 1 | 2 |
| Production of polymer | Production Example | | | | | |
| | 1 | 2 | 2 | 2 | 1 | 2 |
| Pigment | | | | | | |
| Kind | Pigment -1 | Pigment -2 | Pigment -3 | Pigment -4 | Pigment -5 | Pigment -6 |
| Bulk (mL/g) | 4.0 | 6.0 | 8.0 | 12.0 | 2.0 | 3.2 |
| D50 (μm) | 12.8 | 8.5 | 6.2 | 5.1 | 41.2 | 21.5 |
| D90 (μm) | - | 17.4 | 16.1 | - | 62.5 | 67.5 |
| Content of coarse particles having a particle size of 20 μm or more (wt%) | 7 | 3 | 0 | 0 | 81 | 53 |
| Pigment-containing polymer particles | | | | | | |
| Dispersed particle size D 50 (nm) | 107 | 106 | 98 | 88 | 128 | 108 |
| Dispersed particle size D 90 (nm) | 151 | 149 | 144 | 132 | 284 | 194 |
| Ejection reliability | ○ | ○ | ○ | ○ | × | Δ |
| Image density | 1.08 | 1.15 | 1.17 | 1.20 | 0.99 | 1.02 |
| Image uniformity | ○ | ○ | ○ | ○ | × | Δ |
| Rubfastness | ○ | ○ | ○ | ○ | × | Δ |

From Table 2, it was confirmed that the water-based inks obtained in Examples 1 to 4 were excellent in ejection reliability, image density, image uniformity and rubbing resistance as compared to the water-based inks obtained in Comparative Examples 1 and 2. Further, it was confirmed that the water-based inks of the present invention were excellent in re-dispersibility.

The water-based ink containing the water dispersion for ink-jet printing according to the present invention is excellent in ejection reliability, image density, image uniformity and rubbing resistance. The water-based ink of the present invention can be suitably used in high-speed printing operation using an ink-jet printing method.

## Claims

1. A water-based ink for ink-jet printing comprising:

   a water dispersion comprising water-insoluble polymer particles containing an organic pigment having a bulk of 3.5 to 20 mL/g as measured at 25°C according to JIS K5101-18 (1978).

2. The water-based ink according to claim 1 wherein the organic pigment has D50 (cumulative 50% value in frequency distribution of scattering intensity when the cumulative percentage is calculated sequentially from smaller particles) of 2 to 15 μm, and D90 (cumulative 90% value in frequency distribution of scattering intensity when the cumulative percentage is calculated sequentially from smaller particles) of 60 μm or less.

3. The water-based ink according to any one of claims 1 or 2, wherein the water-insoluble polymer particles containing the organic pigment have D50 (cumulative 50% value in frequency distribution of scattering intensity when the cumulative percentage is calculated sequentially from smaller particles) of 70 to 120 nm, and D90 (cumulative 90% value in frequency distribution of scattering intensity when the cumulative percentage is calculated sequentially from smaller particles) of 90 to 180 nm.

4. The water-based ink according to any one of claims 1 to 3, wherein the water-insoluble polymer is a water-insoluble vinyl polymer obtained by copolymerizing a monomer mixture containing a salt-forming group-containing monomer (a), a macromer (b) and a hydrophobic monomer (c).

5. The water-based ink according to claim 4, wherein the hydrophobic monomer (c) is an alkyl methacrylate containing a long-chain alkyl group having 8 to 30 carbon atoms and/or an aromatic ring-containing monomer.

6. A process for producing a water-based ink for ink-jet printing comprising a water dispersion, the process comprising the following steps (1) and (2):

   (1) subjecting an organic pigment to a pulverization/classification treatment to obtain an organic pigment having a bulk of 3.5 to 20 mL/g as measured at 25°C according to JIS K5101-18 (1978); and
   (2) dispersing the organic pigment obtained in the step (1) in an aqueous medium in the presence of a water-insoluble polymer to obtain water-insoluble polymer particles containing the organic pigment.

7. The process for producing a water-based ink for ink-jet printing according to claim 6, wherein a fluidized bed-type jet mill is used for the pulverisation/classification treatment.

8. The process for producing a water-based ink for ink-jet printing according to claim 7, wherein the pulverization/classification treatment is carried out under a condition that a rotating speed of a pulverization rotor is 3000 to 8000 rpm and of a classification rotor is 1000 to 5000 rpm.

9. The process for producing a water-based ink for ink-jet printing according to claim 7 or 8, wherein a content of coarse particles having a particle size of 20 μm or more in the organic pigment (ratio of number of coarse particles having a particle size of 20 μm or more in frequency distribution) obtained by the step (1) is 8% or less.

## Patentansprüche

1. Tinte auf Wasserbasis zum Tintenstrahldrucken, umfassend:

   eine Wasserdispersion, die wasserunlösliche Polymerpartikel umfasst, die ein organisches Pigment mit einem Bulk-Wert von 3,5 bis 20 ml/g, gemessen bei 25°C gemäß JIS K5101-18(1978), enthalten.

2. Tinte auf Wasserbasis gemäß Anspruch 1, worin das organische Pigment einen D50-Wert (kumulativer 50 %-Wert in der Häufigkeitsverteilung der Streuintensität, wenn der kumulative Prozentwert sequentiell von den kleineren Teilchen an berechnet wird) von 2 bis 15 μm hat und einen D90-Wert (kumulativer 90 %-Wert in der Häufigkeitsverteilung der Streuintensität, wenn der kumulative Prozentwert sequentiell von den kleineren Teilchen an berechnet wird) von 60 μm oder weniger hat.

3. Tinte auf Wasserbasis gemäß irgendeinem der Ansprüche 1 oder 2, worin die wasserunlöslichen Polymerteilchen, die das organische Pigment enthalten, einen D50-Wert (kumulativer 50 %-Wert in der Häufigkeitsverteilung der Streuintensität, wenn der kumulative Prozentwert sequentiell von den kleineren Teilchen an berechnet wird) von 70 bis 120 nm haben, und einen D90-Wert (kumulativer 90 %-Wert in der Häufigkeitsverteilung der Streuintensität, wenn der kumulative Prozentwert sequentiell von den kleineren Teilchen an berechnet wird) von 90 bis 180 nm hat.

4. Tinte auf Wasserbasis gemäß irgendeinem der Ansprüche 1 bis 3, worin das wasserunlösliche Polymer ein wasserunlösliches Vinylpolymer ist, das durch Copolymerisieren einer Monomermischung, die ein eine salzbildende Gruppe enthaltendes Monomer (a), ein Makromer (b) und ein hydrophobes Monomer (c) enthält, erhalten wird.

5. Tinte auf Wasserbasis gemäß Anspruch 4, worin das hydrophobe Monomer (c) ein Alkylmethacrylat ist, das eine langkettige Alkylgruppe mit 8 bis 30 Kohlenstoffatomen enthält, und/oder ein Monomer, das einen aromatischen Ring enthält, ist.

6. Verfahren zur Herstellung einer Tinte auf Wasserbasis zum Tintenstrahldrucken, die eine Wasserdispersion umfasst, worin das Verfahren die folgenden Schritte (1) und (2) umfasst:

    (1) Durchführen einer Pulverisierungs-/Klassierungsbehandlung mit einem organischen Pigment, um ein organisches Pigment mit einem Bulk-Wert von 3,5 bis 20 ml/g, gemessen bei 25˚C gemäß JIS K5101-18(1978) zu erhalten; und
    (2) Dispergieren des in Schritt (1) erhaltenen organischen Pigments in einem wässrigen Medium in Gegenwart eines wasserunlöslichen Polymers, um wasserunlösliche Polymerpartikel, die das organische Pigment enthalten, zu erhalten.

7. Verfahren zur Herstellung einer Tinte auf Wasserbasis zum Tintenstrahldrucken gemäß Anspruch 6, worin für die Pulverisierungs-/Klassierungsbehandlung eine Strahlmühle vom Wirbelbetttyp verwendet wird.

8. Verfahren zur Herstellung einer Tinte auf Wasserbasis zum Tintenstrahldrucken gemäß Anspruch 7, worin die Pulverisierungs-/Klassierungsbehandlung unter Bedingungen durchgeführt wird, dass die Drehgeschwindigkeit des Pulverisierungs-Rotors 3.000 bis 8.000 Upm ist und die des Klassierungs-Rotors 1.000 bis 5.000 Upm ist.

9. Verfahren zur Herstellung einer Tinte auf Wasserbasis zum Tintenstrahldrucken gemäß Anspruch 7 oder 8, worin der Gehalt von groben Teilchen mit einer Teilchengröße von 20 μm oder mehr im organischen Pigment, das in Schritt (1) erhalten wird (Verhältnis der Anzahl grober Teilchen mit einer Teilchengröße von 20 μm oder mehr in der Häufigkeitsverteilung), 8 % oder weniger ist.

**Revendications**

1. Encre à base d'eau pour impression par jet d'encre, comprenant :

    une dispersion dans l'eau, comprenant des particules de polymère insoluble dans l'eau contenant un pigment organique ayant un volume massique apparent allant de 3,5 à 20 ml/g, mesuré à 25˚C selon JIS K5101-18(1978).

2. Encre à base d'eau selon la revendication 1, où le pigment organique a un D50 (valeur à 50% cumulés de la distribution de fréquence de l'intensité de diffusion où le pourcentage cumulé est calculé séquentiellement depuis les plus petites particules) allant de 2 à 15 μm et un D90 (valeur à 90% cumulés de la distribution de fréquence de l'intensité de diffusion où le pourcentage cumulé est calculé séquentiellement depuis les plus petites particules) de 60 μm ou moins.

3. Encre à base d'eau selon l'une quelconque des revendications 1 ou 2, où les particules de polymère insoluble dans l'eau contenant le pigment organique ont un D50 (valeur à 50% cumulés de la distribution de fréquence de l'intensité de diffusion où le pourcentage cumulé est calculé séquentiellement depuis les plus petites particules) allant de 70 à 120 nm et un D90 (valeur à 90% cumulés de la distribution de fréquence de l'intensité de diffusion où le pourcentage cumulé est calculé séquentiellement depuis les plus petites particules) allant de 90 à 180 nm.

4. Encre à base d'eau selon l'une quelconque des revendications 1 à 3, où le polymère insoluble dans l'eau est un polymère vinylique insoluble dans l'eau obtenu par copolymérisation d'un mélange de monomères contenant un monomère (a) contenant un radical formant sel, un macromère (b) et un monomère hydrophobe (c).

5. Encre à base d'eau selon la revendication 4, où le monomère hydrophobe (c) est un méthacrylate d'alkyle contenant un radical alkyle à longue chaine ayant 8 à 30 atomes de carbone et/ou un monomère contenant un cycle aromatique.

6. Procédé de production d'une encre à base d'eau pour l'impression par jet d'encre, comprenant une dispersion dans l'eau, le procédé comprenant les étapes (1) et (2) suivantes :

(1) soumettre un pigment organique à un traitement de pulvérisation/classification pour obtenir un pigment organique ayant un volume massique apparent allant de 3,5 à 20 ml/g, mesuré à 25°C selon JIS K5101-18 (1978), et
(2) disperser le pigment organique obtenu à l'étape (1), dans un milieu aqueux en présence d'un polymère insoluble dans l'eau pour obtenir des particules de polymère insoluble dans l'eau contenant le pigment organique.

7. Procédé de production d'une encre à base d'eau pour l'impression par jet d'encre selon la revendication 6, où un broyeur à jet de type lit fluidisé est utilisé pour le traitement de pulvérisation/classification.

8. Procédé de production d'une encre à base d'eau pour l'impression par jet d'encre selon la revendication 7, où le traitement de pulvérisation/ classification est réalisé dans des conditions telles que la vitesse de rotation du rotor de pulvérisation se situe dans l'intervalle allant de 3000 à 8000 tpm et du rotor de classification se situe dans l'intervalle allant de 1000 à 5000 tpm.

9. Procédé de production d'une encre à base d'eau pour l'impression par jet d'encre selon la revendication 7 ou 8, où la teneur en particules grossières ayant une taille des particules de 20 $\mu$m ou plus dans le pigment organique (rapport du nombre de particules grossières ayant une taille des particules de 20 $\mu$m ou plus dans la distribution de fréquence) obtenue à l'étape (1) est de 8% ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0039226 A
- JP 2004217905 A
- JP 11012513 A
- EP 0822238 A
- US 20040244622 A
- US 20050009951 A
- US 20020044186 A
- JP 2002035631 A
- JP 11216425 A
- JP 2004078063 A
- JP 2001293438 A
- JP 9286939 A